# EUROPÄISCHE PATENTSCHRIFT

(11) **EP 1 245 342 B1**
(45) Veröffentlichungstag und Bekanntmachung des Hinweises auf die Patenterteilung: **04.06.2008**
(21) Anmeldenummer: 02003088.8
(22) Anmeldetag: 13.02.2002
(51) Int. Cl.: B25H 1/00, B23Q 5/38

(54) **Vorschubantrieb**
feed mechanism
mécanisme d'avancement

(30) Priorität: 30.03.2001 DE 10116111; 18.07.2001 DE 10134928
(43) Veröffentlichungstag der Anmeldung: 02.10.2002
(73) Patentinhaber: Gölz GmbH, 53940 Hellenthal-Blumenthal (DE)
(72) Erfinder: Koenn, Bertram, 53940 Hellenthal (DE)
(74) Vertreter: Müller-Gerbes, Margot

(56) Entgegenhaltungen:
- GB-A- 686 410
- GB-A- 991 082
- GB-A- 1 378 909
- US-A- 2 995 960
- US-A- 5 306 215

## Beschreibung

Die Erfindung betrifft einen Vorschubantrieb mit einer Vorschubwelle und einem auf die Vorschubwelle aufgesetzten Drehgriff zum Antrieb derselben um eine Drehachse.

Vorschubantriebe finden beispielsweise an Bohrgeräten, wie Kernbohrgeräten Verwendung. Die Bohrgeräte sind an einem Bohrschlitten gehaltert, der entlang einer Führungssäule über eine Zahnstange oder Gewindespindel oder Seil oder dergleichen in einer Vorschubrichtung und entgegengesetzt zu dieser bewegbar ist. Die Bewegung des Bohrschlittens entlang der Führungssäule wird mittels des üblicherweise handbetätigten Vorschubantriebes bewirkt, indem ein zugehöriger Drehgriff entsprechend des gewünschten Vorschubes um eine Drehachse gedreht wird.

In der Praxis ist es häufig notwendig, mit beispielsweise zwei verschiedenen Vorschüben für ein Bohrgerät, insbesondere Kernbohrgerät zu arbeiten. Zu diesem Zweck ist es z. B. aus der US-A-2 995 960 bekannt, ein in den Bohrschlitten integriertes schaltbares Getriebe vorzusehen, was jedoch sehr aufwendig und zudem gewichtserhöhend ist und nicht ohne Montageaufwand gegen andere manuelle oder automatische Vorschubantriebe austauschbar ist.

Die Erfindung hat sich die Aufgabe gestellt, einen Vorschubantrieb vorzuschlagen, mittels dessen auf einfache Weise zwei verschiedene Vorschübe realisiert werden können und der auf einfache Weise montierbar sein soll.

Zur Lösung der gestellten Aufgabe wird ein Vorschubantrieb gemäß den Merkmalen des Patentanspruches 1 vorgeschlagen.

Vorteilhafte Ausgestaltungen und Weiterbildungen des erfindungsgemäßen Vorschubantriebes sind Gegenstand der Unteransprüche.

Die Erfindung betrifft des weiteren ein Kernbohrgerät, welches an einem Bohrschlitten auf einer Führungssäule gehaltert ist, wobei die Bewegung des das Kernbohrgerät tragenden Bohrschlittens mittels eines erfindungsgemäßen Vorschubantriebes bewirkt wird.

Die erfindungsgemäße Lösung sieht vor, anstelle eines üblichen starr mit einer Vorschubwelle des Vorschubantriebes verbundenen Drehgriffes diesen Drehgriff mit einem zusätzlichen Planetengetriebe auszustatten, mittels dessen die Drehbewegung des Drehgriffes auf die Vorschubwelle des Vorschubantriebes übertragen wird. Ein solchermaßen ausgestalteter Drehgriff kann an dafür vorgerichteten Geräten einfach, z. B. durch abtriebsseitiges Aufstecken des Planetengetriebes auf die Vorschubwelle angebracht werden. Auf diese einfache Weise kann der erfindungsgemäße Vorschubantrieb auch gegen vorhandene üblich ausgestaltete Drehgriffe oder Automatik-Vorschubantriebe, z. B. von Kernbohrgeräten, ausgetauscht werden.

Das beim erfindungsgemäß ausgebildeten Vorschubantrieb vorgesehene Planetengetriebe weist mindestens zwei Schaltstufen auf, mittels dessen die Vorschubwelle über den Drehgriff antreibbar ist, wobei der Antrieb in jeder Schaltstufe des Planetengetriebes mit jeweils unterschiedlichem Übersetzungsverhältnis bewirkbar ist.

Durch entsprechende Auswahl der Schaltstufe des Planetengetriebes des erfindungsgemäß ausgestalteten Vorschubantriebes können sodann bei gleichbleibender Drehung des Drehgriffes um die Drehachse unterschiedliche Vorschübe auf einfache Weise erzeugt werden.

Eine Ausführungsform der Erfindung sieht vor, daß das Planetengetriebe ein Gehäuse, ein innenverzahntes Hohlrad, mindestens ein auf einem innenverzahnten Planetenträger drehbar gelagertes und mit dem Hohlrad in Eingriff stehendes Planetenrad und eine Antriebswelle mit darauf angeordnetem Sonnenrad umfaßt, und die Antriebswelle zur Ausbildung der Schaltstufen axial verschieblich im Gehäuse gelagert ist, wobei in einer ersten Schaltstufe das Sonnenrad der Antriebswelle mit der Innenverzahnung des Planetenträgers in Eingriff kommt und in einer zweiten Schaltstellung mit dem mindestens einen Planetenrad in Eingriff kommt und das Gehäuse gegen eine Verdrehung um die Drehachse gesichert ist.

Auf diese Weise wird erreicht, daß das Planetengetriebe in der ersten Schaltstufe, in der das Sonnenrad auf der Antriebswelle mit der Innenverzahnung des Planetenträgers in Eingriff steht, außer Funktion gesetzt wird und ein direkter Antrieb im Übersetzungsverhältnis 1:1 auf die Vorschubwelle des Vorschubantriebes erfolgt.

Zur Erzielung einer z. B. langsameren Vorschubgeschwindigkeit wird das Planetengetriebe in seine zweite Schaltstufe verbracht, etwa durch eine axiale Verlagerung des Drehgriffes und damit einhergehender axialer Verschiebung der Antriebswelle mit dem darauf angebrachten Sonnenrad. Nunmehr greift das Sonnenrad nicht mehr in die Innenverzahnung des Planetenträgers ein, sondern kämmt mit dem mindestens einen Planetenrad, welches seinerseits in der Innenverzahnung des Hohlrades abläuft. Hierdurch wird das Planetengetriebe in an sich bekannter Weise in Funktion gesetzt und es wird ein Vorschub mit einer Untersetzung, beispielsweise im Verhältnis 1:4 ermöglicht.

Auch ist es möglich, eine Übersetzung von z. B. 1:4 in dieser Schaltstellung vorzusehen.

Selbstverständlich sind im Rahmen der Erfindung auch andere konstruktive Gestaltungen des Planetengetriebes denkbar, mit denen sich unterschiedliche Schaltstufen und entsprechend unterschiedliche Übersetzungsverhältnisse zwischen Drehgriff und Vorschubwelle realisieren lassen.

Um die unterschiedlichen Wirkpositionen des Planetengetriebes zu ermöglichen, kann der Vorschubantrieb vorteilhaft mit Haltemitteln ausgestattet werden, die mit dem Gehäuse des Planetengetriebes in Eingriff kommen, wenn dieses auf die Vorschubwelle aufgesetzt bzw. aufgesteckt wird und es gegen eine Verdrehung um die Drehachse sichern.

Weitere Einzelheiten der Erfindung werden nachfolgend anhand der in den Zeichnungen dargestellten Ausführungsbeispiele näher erläutert. Es zeigen:
- Figur 1: einen Drehgriff eines erfindungsgemäßen Vorschubantriebes in der Explosionsdarstellung,
- Figur 2: einen Vorschubantrieb eines Kernbohrgerätes in schematisierter Darstellung, an dem ein Drehgriff angesetzt werden kann,
- Figur 3: den Vorschubantrieb gemäß Figur 2 in schematisierter Darstellung mit angesetztem Drehgriff in der Ansicht gemäß Pfeil A in Figur 2.

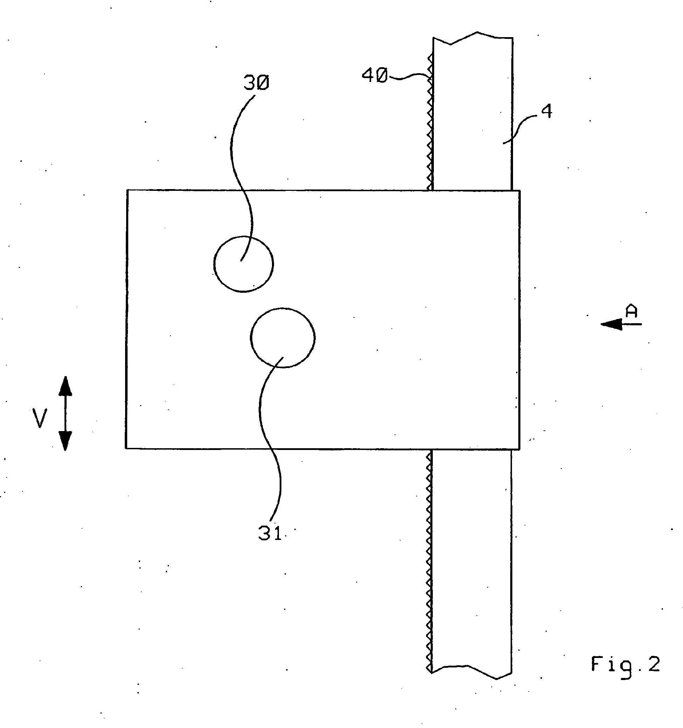

In der Figur 2 ist ein Vorschubantrieb für eine Kernbohrmaschine (nicht dargestellt) gezeigt, der eine Halterung der Kernbohrmaschine und den Vorschub derselben ermöglicht. Zu diesem Zweck ist der Vorschubantrieb an einer Führungssäule 4 nach Art eines Bohrschlittens gehaltert und kann in Pfeilrichtung V, die der Vorschubrichtung entspricht, abwärts bewegt werden bzw. entgegen dieser Richtung aufwärts bewegt werden. Die Führungssäule 4 weist hierzu eine Zahnstange 40 auf, in die ein nicht näher dargestellte Antriebsritzel des Vorschubantriebes eingreift. Dieses Antriebsritzel wird über eine sich quer durch den Vorschubantrieb erstreckende Vorschubwelle 31 betätigt, so daß bei entsprechender Drehung der Vorschubwelle 31 der Vorschubantrieb mit dem Bohrschlitten in Pfeilrichtung V aufwärts bzw. abwärts bewegt wird.

Wenn nun das nicht dargestellte Kernbohrgerät am Bohrschlitten mit Vorschubantrieb befestigt wird, kann dieses durch Drehung der Vorschubwelle 31 in Vorschubrichtung V bzw. entgegengesetzt dazu verfahren werden.

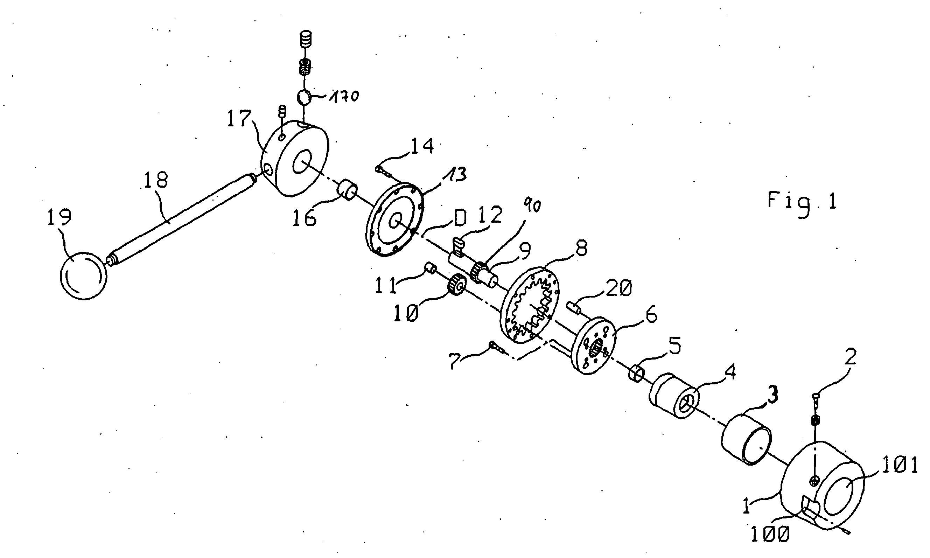

Die Betätigung der Vorschubwelle 31, die beidseits aus dem Vorschubantrieb herausgeführt ist, wird über einen Drehgriff bewirkt, der entsprechend wahlweise beidseits auf die Vorschubwelle 31 aufgesetzt werden kann und in näheren Einzelheiten aus der Figur 1 ersichtlich ist.

Der Drehgriff umfaßt eine Nabe 17, an welchem Griffstangen 18 mit Kugelköpfen 19 befestigt werden können, um eine Drehung von Hand um die Drehachse D zu bewirken. Es sind auch andere Gestaltungen des Drehgriffes, wie z. B. als Kurbel oder Handrad möglich

Zwischen der Nabe 17 und dem Vorschubantrieb mit Vorschubwelle 31 ist ein Planetengetriebe angeordnet, welches von einem becherförmigen Gehäuse 1 und einem an der Nabe 17 zur Anlage kommenden Getriebedeckel 13 umgeben wird, die über Schrauben 14 miteinander verschraubt werden. Innerhalb des Planetengetriebes werden ein mit einer Innenverzahnung ausgestattetes Hohlrad 8, eine Antriebswelle 9 mit Sonnenrad 90 und Paßfeder 12, mindestens ein zwischen Sonnenrad 90 und Innenverzahnung des Hohlrades 8 ablaufendes Planetenrad 10 sowie ein ebenfalls eine Innenverzahnung aufweisender Planetenträger 6 in an sich bekannter Weise angeordnet, um das Planetengetriebe auszubilden.

Das Hohlrad 8 ist über die Verbindungsschrauben 14 zwischen Getriebedeckel 13 und Gehäuse 1 starr mit dem Gehäuse 1 verbunden. Die Antriebswelle 9 ist an ihrem die Paßfeder 12 aufweisenden Ende in einer Buchse 16 drehbar gelagert und aus dem Getriebedeckel 13 herausgeführt und steht über die Paßfeder 12 formschlüssig mit der Nabe 17 in Eingriff, so daß eine Drehbewegung der Nabe 17 über die Griffstangen 18 um die Drehachse D auf die Antriebswelle 9 des Planetengetriebes übertragen wird.

Das Planetengetriebe ist damit dem Drehgriff, bestehend aus Nabe 17 und Griffstangen 18 nachgeordnet.

Auf der Abtriebseite des Planetengetriebes ist der das mindestens eine Planetenrad 10 mittels Zylinderstiften 20 tragende Planetenträger 6 über eine Buchse 5 mit einer Aufnahmehülse 4 verbunden, in die die Vorschubwelle 31 formschlüssig über eine Öffnung 101 im Gehäuse 1 einsteckbar ist. Außenseitig der Aufnahmehülse 4 ist noch eine weitere Buchse 3 für die drehbare Lagerung gegenüber dem Gehäuse 1 vorgesehen. Die Aufnahmehülse 4 ist über Schrauben 7 starr mit dem Planetenträger 6 verbunden, so daß ein Antrieb der in die Aufnahmehülse 4 eingesteckten Vorschubwelle 31 über das Planetengetriebe abtriebsseitig erfolgen kann.

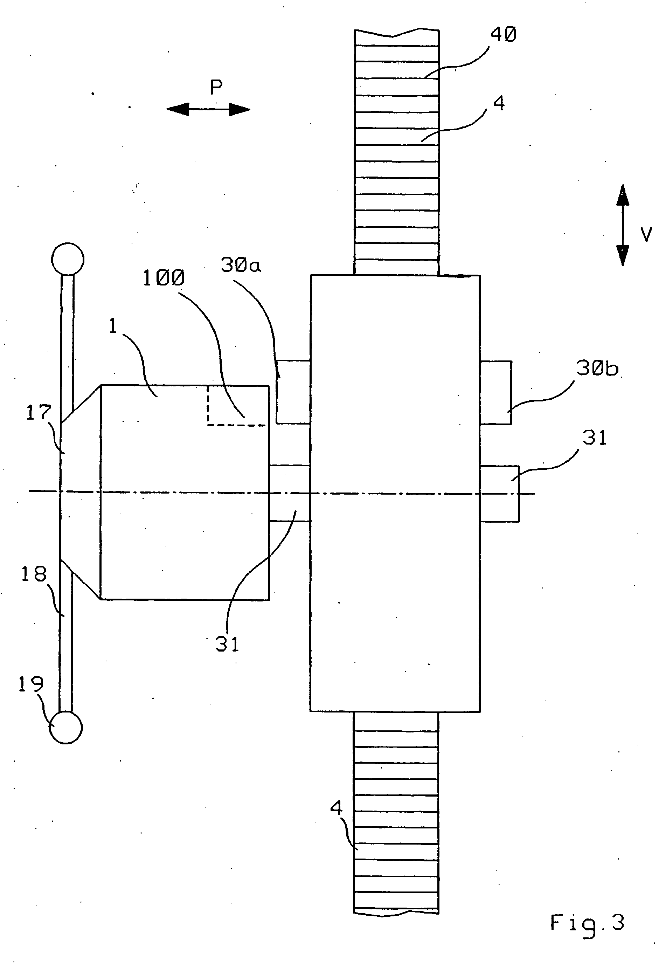

Beim Einsatz des Drehgriffes, wie er in der Figur 3 dargestellt ist, wird dieser mit seinem Planetengetriebe auf ein aus dem Vorschubantrieb herausgeführtes Ende der Vorschubwelle 31, in der Darstellung gemäß Figur 3 auf das auf der linken Seite herausragende Ende aufgesteckt, wobei die Vorschubwelle 31 in der Aufnahmehülse 4 des Planetengetriebes formschlüssig aufgenommen wird.

Der Vorschubantrieb weist einen sich parallel zur Vorschubwelle 31 erstreckenden vorstehenden Haltebolzen 30a auf, der mit einer entsprechenden stirnseitig im Gehäuse 1 des Planetengetriebes ausgebildeten Aufnahmebohrung 100 korrespondiert und in diese eingreift, so daß das Gehäuse 1 des Planetengetriebes gegen Verdrehung um die Drehachse D gesichert wird, wenn es gemäß Pfeil P auf die Vorschubwelle 31 des Vorschubantriebes aufgesetzt wird. Mittels eines Verriegelungsstiftes 2 wird das Gehäuse 1 des Weiteren in dieser Position auf der Vorschubwelle 31 lösbar gesichert, so daß der Drehgriff während des Betriebs nicht von der Vorschubwelle 31 herabfallen kann.

Durch Drehung der Griffstangen 18 um die Drehachse D erfolgt somit ein Antrieb der Vorschubwelle 31 über das Planetengetriebe, um den gewünschten Vorschub zu erzeugen.

Das Planetengetriebe ist hierzu in zwei verschiedenen Schaltstufen betreibbar, in denen verschiedene Übersetzungsverhältnisse zwischen der Nabe 17 und der Vorschubwelle 31 realisiert werden. Diese Schaltstellungen werden durch eine manuell herbeizuführende axiale Verlagerung der Nabe 17 mit den daran angebrachten Handgriffen 18 in Pfeilrichtung P aufgesucht.

Wie insbesondere aus der Fig. 1 ersichtlich, ist die Antriebswelle 9, welche auch das fest mit dieser verbundene Sonnenrad trägt, über eine Paßfeder 12 mit der Nabe 17 verbunden und darüber hinaus drehbar um die Drehachse D und in axialer Richtung verschieblich in den Buchsen 16 und 5 innerhalb des Gehäuses 1 des Planetengetriebes angeordnet.

In einer ersten, der Darstellung in Fig. 3 entsprechenden Schaltstellung liegt die Nabe 17 unmittelbar am Gehäuse 1 des Planetengetriebes an. Hierbei ist die entsprechend an der Nabe 17 gehalterte Antriebswelle so angeordnet, daß das Sonnenrad 90 mit der Innenverzahnung des Planetenträgers 6 in Eingriff steht, nicht jedoch mit den Planetenrädern 10 und der Innenverzahnung des Hohlrades 8.

Das Planetengetriebe ist auf diese Weise in der in der Figur 3 dargestellten Schaltstellung außer Funktion gesetzt und es erfolgt ein starrer Durchtrieb durch das Planetengetriebe im Übersetzungsverhältnis 1:1 zwischen der Nabe 17 des Drehgriffes und der Vorschubwelle 31 des Vorschubantriebes

Wird jedoch die Nabe 17 des Drehgriff entgegen der Darstellung gemäß Figur 3 in Pfeilrichtung P nach links in eine zweite Schaltstellung verschoben, so befindet sich die Nabe 17 in einer vom Gehäuse 1 axial beabstandeten Position. Entsprechend dieses Verschiebeweges in Pfeilrichtung P wird auch die in der Nabe 17 gehalterte Antriebswelle 9 axial verschoben. Nunmehr greift das Sonnenrad 90 nicht mehr in die Innenverzahnung des Planetenträgers 6 ein, sondern gelangt in Eingriff mit den Planetenrädern 10, die ihrerseits an der Innenverzahnung des Hohlrades 8 ablaufen.

Dies hat zur Folge, daß das Planetengetriebe in Funktion gesetzt wird und bei Drehung der Nabe 17 zur Erzeugung des Vorschubes das Planetengetriebe die gewünschte Unter- bzw. Übersetzung beispielsweise im Verhältnis 1:4 bewirkt und ein entsprechend veränderter Antrieb der Vorschubwelle 31 bei unveränderter Drehung des Drehgriffes erfolgt.

Es ist von daher möglich, durch Verschieben des Drehgriffes aus einer ersten Schaltstellung gemäß Figur 3 in eine zweite Schaltstellung das Planetengetriebe des Drehgriffes in bzw. außer Funktion zu setzen, wodurch auf einfachste Weise zwei unterschiedliche Übersetzungsverhältnisse zwischen Drehgriff und Vorschubwelle 31 des Vorschubantriebes bewirkt werden können.

Die jeweiligen Positionen der Nabe 17, die für die Verlagerung und den exakten Eingriff des Sonnenrades 90 der Antriebswelle 9 mit dem Planetenträger 6 bzw. den Planetenrädern 10 erforderlich sind, können durch Rasteingriff einer federbelasteten Rastkugel 170 in entsprechenden Ausnehmungen (nicht dargestellt) sichergestellt werden.

Anstelle einer Verlagerung der Nabe 17 des Drehgriffes in Pfeilrichtung P, um zwischen den Schaltstellungen des Planetengetriebes zu wechseln, kann auch eine entsprechende Verschiebung des Gehäuses 1 des Planetengetriebes vorgenommen werden, um dieses aus der ersten in die zweite Wirkposition und umgekehrt zu verbringen, wobei die Nabe 17 ortsfest verbleibt. Das Gehäuse 1 dient in diesem Fall als Umschalteinheit zwischen der ersten und zweiten Schaltstellung für die unterschiedlichen mit dem Drehgriff erzeugbaren Übersetzungen und Vorschübe.

Es ist offensichtlich, daß das Handrad mit integriertem schaltbaren Planetengetriebe auf einfache Weise gegen ein einfaches Handrad ohne Planetengetriebe oder auch gegen einen automatisierten Elektroantrieb ausgetauscht werden kann. Dies ermöglicht, auch an bereits vorhandenen Vorschubantrieben den erfindungsgemäß ausgebildeten Drehgriff mit Planetengetriebe nachzurüsten oder wechselweise einzusetzen.

Die Nabe 17 kann lediglich mit einem Drehhebel, mehreren Griffstangen zur Ausbildung eines Drehkreuzes oder auch mit einem Handrad oder einer Kurbel zur Erzeugung der Drehbewegung um die Drehachse D ausgestattet werden.

Über eine Schnellverriegelung mittels eines Verriegelungselementes 2 kann der erfindungsgemäß ausgestaltete Drehgriff auf einfache Weise an beiden Seiten des Vorschubantriebes verliersicher angesetzt werden. Hierzu ist der Vorschubantrieb beidseitig mit herausgeführten Enden der Vorschubwelle 31 sowie entsprechend korrespondierenden Haltebolzen 30a bzw. 30b für den Eingriff in die Aufnahmebohrungen 100 des Gehäuses 1 ausgebildet.

Der Vorschubantrieb ist neben Kernbohrmaschinen zur Anwendung an verschiedensten Maschinen mit manuellem Vorschub geeignet.

## Patentansprüche

1. Vorschubantrieb mit einer Vorschubwelle (31) und einem auf die Vorschubwelle aufgesetzten Drehgriff (6, 8, 9, 10) zum Antrieb derselben um eine Drehachse (D), **gekennzeichnet durch** ein dem Drehgriff nachgeordnetes und abtriebseitig auf die Vorschubwelle aufgesetztes Planetengetriebe (17, 18, 19) mit mindestens zwei Schaltstufen, mittels dessen die Vorschubwelle über den Drehgriff antreibbar ist, wobei der Antrieb in jeder Schaltstufe des Planetengetriebes mit jeweils unterschiedlichem Übersetzungsverhältnis bewirkbar ist.

2. Vorschubantrieb nach Anspruch 1, **dadurch gekennzeichnet, dass** das Planetengetriebe ein Gehäuse (1), ein innenverzahntes Hohlrad (8), mindestens ein auf einem innenverzahnten Planetenträger (6) drehbar gelagertes und mit dem Hohlrad (8) in Eingriff stehendes Planetenrad (10) und eine Antriebswelle (9) mit darauf angeordnetem Sonnenrad (90) umfasst, und die Antriebswelle (9) zur Ausbildung der Schaltstufen axial verschieblich im Gehäuse (1) gelagert ist, wobei in einer ersten Schaltstufe das Sonnenrad (90) der Antriebswelle (9) mit der Innenverzahnung des Planetenträgers (6) in Eingriff kommt und in einer zweiten Schaltstellung mit dem mindestens einen Planetenrad (10) in Eingriff kommt und das Gehäuse (1) gegen eine Verdrehung um die Drehachse (D) gesichert ist.

3. Vorschubantrieb nach Anspruch 2, **dadurch gekennzeichnet, dass** die axiale Verschiebung der Antriebswelle (9) mittels des Drehgriffes bewirkbar ist.

4. Vorschubantrieb nach einem der Ansprüche 1 bis 3, **dadurch gekennzeichnet, dass** der Vorschubantrieb Haltemittel aufweist, die mit dem Gehäuse (1) des Planetengetriebes in Eingriff kommen und gegen Verdrehung um die Drehachse (D) sichern.

5. Vorschubantrieb nach einem der Ansprüche 1 bis 4, **dadurch gekennzeichnet, dass** in der ersten Schaltstufe des Planetengetriebes ein Übersetzungsverhältnis von 1:1 zwischen dem Drehgriff und der Vorschubwelle und in der zweiten Schaltstufe ein Untersetzungsverhältnis, wie etwa 1:4, zwischen Drehgriff und Vorschubwelle des Vorschubantriebes erzeugbar ist.

6. Kernbohrgerät mit einem entlang einer Führungssäule in Vorschubrichtung bewegbaren und das Kernbohrgerät tragenden Bohrschlitten mit einem Vorschubantrieb gemäß einem der vorangehenden Ansprüche.

## Claims

1. A feed drive having a feed shaft (31) and a rotary handle (17, 18, 19) which is put onto the feed shaft and is intended for driving the latter about a rotation axis (D), **characterized by** an epicyclic gearing (6, 8, 9, 10) which is arranged to follow the rotary handle, is put onto the feed shaft on the output drive side and has at least two gear-shift stages and by means of which the feed shaft can be driven via the rotary handle, wherein the drive can be effected in each gear-shift stage of the epicyclic gearing with in each case a different transmission ratio.

2. A feed drive according to claim 1, **characterized in that** the epicyclic gearing comprises a casing (1), an internally toothed ring gear (8), at least one planet gear (10) rotatably mounted on an internally toothed planet carrier (6) and meshing with the ring gear (8), and a drive shaft (9) with sun gear (90) arranged thereon, and the drive shaft (9), for forming the gear-shift stages, is mounted in the casing (1) in an axially displaceable manner, wherein the sun gear (90) of the drive shaft (9) comes into engagement with the internal tooth system of the planet carrier (6) in a first gear-shift stage and comes into engagement with the at least one planet gear (10) in a second gear-shift position, and the casing (1) is secured against rotation about the rotation axis (D).

3. A feed drive according to claim 2, **characterized in that** the axial displacement of the drive shaft (9) can be effected by means of the rotary handle.

4. A feed drive according to one of claims 1 to 3, **characterized in that** the feed drive has retaining means which come into engagement with the casing (1) of the epicyclic gearing and secure it against rotation about the rotation axis (D).

5. A feed drive according to one of claims 1 to 4, **characterized in that** a transmission ratio of 1:1 between the rotary handle and the feed shaft can be produced in the first gear-shift stage of the epicyclic gearing and a transmission ratio such as approximately 1:4 between the rotary handle and the feed shaft of the feed drive can be produced in the second gear-shift stage.

6. A core drilling implement comprising a drill slide which is movable along a guide column in the feed direction, carries the core drilling implement and has a feed drive according to one of the preceding claims.

## Revendications

1. Commande d'avancement équipée d'un arbre d'avancement (31) et d'une poignée tournante (17, 18, 19) appliquée sur l'arbre d'avancement pour entraîner ce dernier autour d'un axe de rotation (D), **caractérisée par** un engrenage planétaire (6, 8, 9, 10) disposé après la poignée tournante, côté sortie sur l'arbre d'avancement, avec au moins deux stades d'enclenchement, au moyen duquel l'arbre d'avancement peut être commandé par la poignée tournante, la commande pouvant être produite, à chaque stade d'enclenchement de l'engrenage planétaire, avec un rapport de transmission respectivement différent.

2. Commande d'avancement selon la revendication 1, **caractérisée en ce que** l'engrenage planétaire comprend un boîtier (1), une roue à denture intérieure (8), au moins un pignon satellite (10) monté à rotation sur un porte-satellite à denture intérieure (6) et se trouvant en prise avec la roue (8), et un arbre de commande (9) sur lequel est aménagée une roue solaire (90), et **en ce que** l'arbre de commande (9) est monté à coulissement axial dans le boîtier (1) pour former les stades d'enclenchement, la roue solaire (90) de l'arbre de commande (9) venant en prise, dans un premier stade d'enclenchement, avec la denture intérieure du porte-satellite (6) et venant en prise, dans une seconde position d'enclenchement, avec le au moins un pignon satellite (10) et le boîtier (1) étant protégé contre une torsion autour de l'axe de rotation (D).

3. Commande d'avancement selon la revendication 2, **caractérisée en ce que** le coulissement axial de l'arbre de commande (9) peut être produit par la poignée tournante.

4. Commande d'avancement selon l'une quelconque des revendications 1 à 3, **caractérisée en ce que** le dispositif de commande d'avancement présente des moyens de maintien, qui viennent en prise avec le boîtier (1) de l'engrenage planétaire et protègent contre une torsion autour de l'axe de rotation (D).

5. Commande d'avancement selon l'une quelconque des revendications 1 à 4, **caractérisée en ce qu'**un rapport de multiplication de 1:1 entre la poignée tournante et l'arbre d'avancement peut être généré au premier stade d'enclenchement de l'engrenage planétaire et **en ce qu'**un rapport de démultiplication, par exemple, d'environ 1:4, entre la poignée tournante et l'arbre d'avancement de la commande d'avancement peut être généré au second stade d'enclenchement.

6. Appareil de carottage muni d'un chariot de forage déplaçable le long d'une colonne de guidage dans le sens d'avancement et portant l'appareil de carottage, avec une commande d'avancement selon l'une quelconque des revendications précédentes.
